# EUROPÄISCHE PATENTSCHRIFT

(11) **EP 1 855 573 B1**
(45) Veröffentlichungstag und Bekanntmachung des Hinweises auf die Patenterteilung: **24.04.2013**
(21) Anmeldenummer: 06701472.0
(22) Anmeldetag: 11.01.2006
(51) Int. Cl.: A47J 43/25

(54) **MEHRFACHREIBE**
MULTI GRATER
MULTIRAPE

(30) Priorität: 08.03.2005 DE 102005011310
(43) Veröffentlichungstag der Anmeldung: 21.11.2007
(73) Patentinhaber: Boerner Kunststoff- und Metallwarenfabrik GmbH, 54526 Landscheid-Niederkail (DE)
(72) Erfinder: BOERNER, Juergen, 54526 Landscheid-Niederkail (DE)
(74) Vertreter: Steil, Christian
(86) Internationale Anmeldenummer: PCT/EP2006/000194
(87) Internationale Veröffentlichungsnummer: WO 2006/094571

(56) Entgegenhaltungen:
- US-A- 2 482 180
- US-A- 4 928 893
- US-A- 6 135 375

## Beschreibung

Die vorliegende Erfindung betrifft eine Mehrfachreibe für Reibgut wie Obst, Gemüse, Käse, Nüsse etc., mit wenigstens drei, vorzugsweise jedoch vier oder sechs Reibeinrichtungen, die jeweils eine bestimmte Reibfunktion aufweisen und an ihren Kanten miteinander verbunden sind, so dass ein im Querschnitt polygonaler Reibenkörper mit einem Hohlraum gebildet ist, in den hinein geriebenes Reibgut abgeführt wird, wobei dem Reibenkörper ein Einsatz zugeordnet ist, der in den Hohlraum einsetzbar ist und zur Aufnahme von geriebenem Reibgut geeignet ist, wobei ein unteres Ende des Reibenkörpers offen ist und der Einsatz über das untere offene Ende in den Hohlraum einführbar ist.

Eine derartige Mehrfachreibe ist unter der Bezeichnung Vier-Kant-Reibe allgemein bekannt.

Eine solche Vier-Kant-Reibe weist vier Reibeinrichtungen auf, die jeweils etwa rechteckförmig ausgebildet sind. Die vier Reibeinrichtungen sind an ihren Längskanten miteinander verbunden, so dass ein im Querschnitt etwa quadratischer Reibenkörper gebildet ist. Der Reibenkörper ist hohl.

An dem oberen Ende des Reibenkörpers ist gewöhnlich ein Griff vorgesehen.

Reibgut kann an den Außenflächen von jeder der vier Reibeinrichtungen in üblicher Weise unter Anwendung von Druck entlanggeführt werden, um so geriebenes Reibgut zu erzeugen, das in das Innere des Reibkörpers hineinfällt.

Im Gebrauch werden derartige Vier-Kant-Reiben häufig etwas schräg gehalten, so dass die gerade benutzte Reibeinrichtung schräg nach oben weist. Hierbei fällt das geriebene Reibgut aus der Unterseite des Reibenkörpers heraus auf eine Auflage, beispielsweise ein Küchenbrett oder Ähnliches.

Es ist auch bekannt, solche Vier-Kant-Reiben unmittelbar auf einen Behälter aufzusetzen, in den hinein das geriebene Reibgut fällt.

Auch ist es bekannt, für die jeweiligen unterschiedlichen Zwecke getrennte Reibeinrichtungen bereitzustellen. Eine solche Reibeinrichtung kann dann beispielsweise auch in etwa horizontaler Lage auf einen Behälter aufgesetzt werden. Es ist auch bekannt, an dem Behälter eine umlaufende Nut im oberen Randbereich vorzusehen, in den hinein eine Reibeinrichtung geschoben werden kann, so dass geriebenes Reibgut in den Behälter hineinfällt.

Aus der US-A-4,928,893 ist eine Lebensmittelverarbeitungsvorrichtung bekannt mit einem hohlen Zerkleinerungselement, das Nahrungsmittelschneidelemente, einen offenen Behälter, der in das Zerkleinerungselement lösbar einsetzbar ist, und zwar zum Aufnehmen von Nahrungsmitteln, die durch die Schneidelemente verarbeitet sind, und ein hohles Griffelement, um Nahrungsmittel den Schneidelementen zuzuführen, aufweist. Die Zerkleinerungs- und Griffelemente sind lösbar drehbar verbunden, um jeweils eines der Nahrungsmittelschneidelemente in eine Nahrungsmittelzerkleinerungsposition relativ zu dem Griffelement zu bringen. Die Verarbeitungsvorrichtung hat eine Aufbewahrungskonfiguration, in der der Behälter innerhalb des Zerkleinerungselementes angeordnet ist und das Zerkleinerungselement innerhalb des Griffelements angeordnet ist.

Aus der US-A-6,135,375 ist eine Lebensmittelreibe bekannt mit konvergierenden Flächen, die einen abgeflachten pyramidenförmigen Reibenkörper bilden, an dem ein Ballgriff an der Kegelspitze befestigt ist. Eingegossene Antirutschfüße sind an jeder der unteren Ecken ausgeformt, so dass die Reibe aufrecht mit der Handfläche einer Hand gehalten werden kann, und ein Lebensmittel kann zerkleinert werden, das in der anderen Hand gehalten wird.

Aus der US-A-2,482,180 ist eine Lebensmittelreibe und Zerkleinerungsvorrichtung bekannt mit einem dreieckigen Körper, der drei Flächen aufweist, einen Griff, der an der oberen Seite angeordnet ist und eine Mehrzahl von Kerben am unteren Ende aufweist, das der Rutschsicherung dient.

Vor diesem Hintergrund ist es die Aufgabe der vorliegenden Erfindung, eine universellere Mehrfachreibe anzugeben.

Diese Aufgabe wird bei der eingangs genannten Mehrfachreibe dadurch gelöst, dass der Einsatz an seinem unteren, Ende einen seitlichen Ansatz aufweist, der als Anschlag dient, um das Maß des Einsetzens bzw. Einführens des Einsatzes zu begrenzen.

Mit der erfindungsgemäßen Mehrfachreibe kann erreicht werden, dass der Einsatz im eingesetzen Zustand immer in einer definierten Relativlage zu dem Reibenkörper einnimmt und dem Benutzer von außen anzeigt, in welcher Lage der Einsatz gerade in den Reibenkörper eingeführt ist.

Bei herkömmlichen Vier-Kant-Reiben ist das Aufsetzen auf einen Behälter in der Regel relativ problematisch, da sich in der Regel keine stabile Lage von Reibe und Behälter erzielen lässt.

Bei der üblichen Anwendung ist das geriebene Reibgut von einem Küchenbrett oder dergleichen zunächst in einen Behälter zu überführen, zur weiteren Bearbeitung.

All diese Nachteile können mit der erfindungsgemäßen Mehrfachreibe, die den Reibenkörper und den zugeordneten Einsatz aufweist, vermieden werden.

Der Begriff Reibeinrichtung ist im vorliegenden Zusammenhang generell breit zu verstehen. Es kann sich um jede Art von Reibe handeln, wie Käsereibe, Muskatreibe, Rohkostreibe, Röstireibe, etc. Der Begriff Reibeinrichtung soll jedoch auch Hobel und Ähnliches umfassen, wie V-Hobel, Waffelschneider, etc.

Die Aufgabe wird somit vollkommen gelöst.

Bei einer bevorzugten Ausführungsform weist der Einsatz im Querschnitt eine an den Reibenkörper angepasste polygonale Form auf.

Dies ermöglicht, die Formen des Reibenkörpers und des Einsatzes so aneinander anzupassen, dass eine möglichst große Menge des geriebenen Reibgutes (im Idealfall 100 %) in den Einsatz gelangt.

Dabei muss der Einsatz jedoch nicht notwendigerweise im Querschnitt mit der gleichen Polygonform ausgestattet sein wie der Reibenkörper. Beispielsweise kann der Reibenkörper sechseckig ausgeführt sein, wohingegen der Einsatz im Querschnitt viereckig ausgebildet ist.

Gemäß einer weiteren bevorzugten Ausführungsform ist der Einsatz je nachdem, mit welcher Reibeinrichtung gearbeitet werden soll, in unterschiedlichen Lagen in den Hohlraum einsetzbar.

Durch diese Maßnahme kann erreicht werden, dass geriebenes Reibgut je nach benutzter Reibeinrichtung immer sicher in den Einsatz fällt. Unterschiedliche Lagen können sich dadurch ergeben, dass der Einsatz in verschiedenen Drehlagen in Bezug auf den Reibenkörper eingesetzt wird. Unterschiedliche Lagen können sich generell aber auch dadurch ergeben, dass der Einsatz verschieden tief in den Reibenkörper eingesetzt wird.

Dabei sind vorzugsweise Mittel vorgesehen, die bei eingesetztem Einsatz erkennbar machen, in welcher Lage der Einsatz in den Hohlraum eingesetzt ist.

Dies kann beispielsweise ein Vorsprung sein, der an dem Einsatz vorgesehen ist und anzeigt, in welcher Richtung bzw. Lage der Einsatz zur Aufnahme von geriebenem Reibgut angeordnet ist. Es versteht sich, dass ein solcher Vorsprung dann an der Mehrfachreibe sichtbar sein soll, selbst wenn der Einsatz in den Reibenkörper eingesetzt ist.

Es ist ferner vorteilhaft, wenn der Einsatz als Hohlkörper zur Aufnahme des geriebenen Reibguts ausgebildet ist, wobei der Einsatz im unteren Bereich geschlossen und im Querschnitt zu einer Seite hin offen ist, und wobei das geriebene Reibgut über die offene Seite in den Einsatz gelangt.

Bei dieser Ausführungsform ist der Einsatz als eine Art Behälter ausgebildet, der so in dem Hohlraum angeordnet werden kann, dass geriebenes Reibgut, das in den Hohlraum abgeführt wird, unmittelbar in den Behältereinsatz übernommen wird.

Hierbei ist auch bevorzugt, wenn ein Fruchthalter zum sicheren Ergreifen von Reibgut bei Nichtgebrauch in dem Einsatz verstaut werden kann.

An dem Reibenkörper und/oder an dem Einsatz ist ein Anschlag vorgesehen, um das Maß des Einsetzens bzw. Einführens des Einsatzes zu begrenzen.

Hierdurch wird erreicht, dass der Einsatz im eingesetzten Zustand immer eine definierte Relativlage zu dem Reibenkörper einnimmt.

Der Einsatz weist an seinem unteren Ende einen seitlichen Ansatz auf, der als Anschlag dient.

Der seitliche Ansatz kann dabei in bevorzugter Ausgestaltung auch dazu dienen, einem Benutzer von außen anzuzeigen, in welcher Lage der Einsatz gerade in den Reibenkörper eingeführt ist.

Gemäß einer besonders bevorzugten Ausführungsform steht der seitliche Ansatz gegenüber einer Seite des Einsatzes vor, die einer Öffnung des Einsatzes gegenüberliegt.

Hierdurch wird erreicht, dass dann, wenn die Öffnung des Einsatzes innerhalb des Hohlraumes des Reibenkörpers nach oben weist (also zur Aufnahme von geriebenem Reibgut angeordnet ist), der seitliche Ansatz nach unten vorsteht. Dies ermöglicht es, dass der seitliche Ansatz in dieser Position nach unten weist und zur Auflage auf einer Unterlage geeignet angeordnet ist. Mit anderen Worten stützt sich die Gesamtanordnung aus Reibenkörper und Einsatz während eines Reibvorganges auf dem seitlichen Ansatz des Einsatzes ab, wobei dieser nach innen in den Hohlraum gedrückt wird.

Somit wird der Einsatz in dem Hohlraum während des Ausführens eines Reibvorganges fixiert.

Da die Mehrfachreibe im Gebrauch in der Regel etwas diagonal gehalten wird, ergibt sich eine besonders ergonomische Handhabe der erfindungsgemäßen Mehrfachreibe.

Besonders bevorzugt ist es auch, wenn an dem Ansatz eine der Rutschsicherung dienende elastische Kante ausgebildet ist.

Bei dieser Ausführungsform kann der Ansatz im Gebrauch als rutschfeste Auflage genutzt werden. Hierdurch kann verhindert werden, dass die Mehrfachreibe einem Benutzer während der Arbeit entgleitet. Somit können auch Verletzungen vermieden werden.

Insgesamt ist es ferner bevorzugt, wenn an dem Reibenkörper und/oder an dem Einsatz Rastmittel vorgesehen sind, um den Einsatz in einer Arbeitsposition an dem Reibenkörper festzulegen.

Hierdurch wird erreicht, dass sich der Einsatz beispielsweise auch dann, wenn der Reibenkörper angehoben wird, nicht unabsichtlich aus dem Hohlraum löst. Somit kann vermieden werden, dass bereits aufgefangenes geriebenes Reibgut versehentlich verschüttet wird.

Generell ist auch denkbar, den Einsatz in unterschiedlichen Tiefen an den Reibenkörper einzurasten, je nachdem, welche Reibeinrichtung zu verwenden ist.

Von besonderem Vorteil ist es dabei, wenn die Rastmittel an der Innenseite von wenigstens einer Reibeinrichtung einen Rastvorsprung vorweisen.

Durch diese Maßnahme kann eine vorhandene Kante oder Ecke des Einsatzes in der Arbeitsposition hintergriffen werden, so dass auf einfache Weise eine rastende Aufnahme des Einsatzes in dem Reibenkörper ermöglicht wird.

Gemäß einer weiteren bevorzugten Ausführungsform ist der Reibenkörper im Bereich wenigstens einiger seiner Kanten mit einem solchen Profil versehen, dass Längsführungsstege des Einsatzes darin geführt werden können.

Hierdurch wird erreicht, dass der Einsatz beim Einsetzen in den Hohlraum definiert geführt wird. Auch kann so erreicht werden, dass selbst bei vergleichsweise großen Toleranzen der Einsatz sicher in dem Reibenkörper gehalten werden kann.

Ferner ist es insgesamt vorteilhaft, wenn der Einsatz im Bereich seines unteren Endes mit einem Griff versehen ist. Hierdurch ist es auf einfache Weise möglich, den Einsatz aus dem Hohlraum des Reibenkörpers herauszuziehen, um das geriebene Reibgut einer weiteren Verwendung zuzuführen.

Gemäß einer weiteren bevorzugten Ausführungsform ist der Reibenkörper im Bereich seines oberen Endes offen oder weist zumindest eine Öffnung auf.

Hierdurch ist es möglich, einen von unten in den Reibenkörper einsetzbaren Einsatz über die Öffnung aus dem Hohlraum auf einfache Weise herauszudrücken.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Figur 1: eine perspektivische schematische Ansicht einer Mehrfachreibe;
- Figur 2: eine perspektivische schematische Ansicht eines Einsatzes der Mehrfachreibe der Figur 1;
- Figur 3: eine Längsschnittansicht durch die Mehrfachreibe der Figur 1 im Gebrauch;
- Figur 4: eine schematische perspektivische Ansicht einer erfindungsgemäße Mehrfachreibe
- Figur 5: eine perspektivische Ansicht eines Einsatzes der Mehrfachreibe der Figur 4;
- Figur 6: eine teilweise weggebrochene Ansicht der Mehrfachreibe der Figur 4 von unten;
- Figur 7: eine der Fig 6. entsprechende schematische Ansicht bei Gebrauch eines Fruchthalters; und
- Figur 8: eine der Figur 6 entsprechende Darstellung einer weiteren alternativen Ausführungsform der Mehrfachreibe.

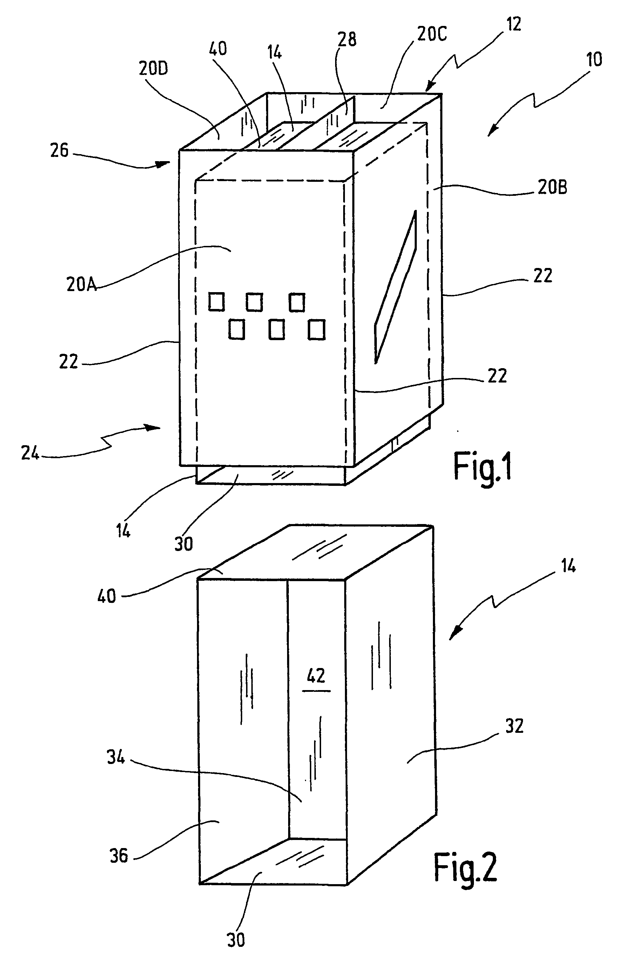

In den Figuren 1 bis 3 ist eine Mehrfachreibe generell mit 10 bezeichnet.

Die Mehrfachreibe 10 weist einen Reibenkörper 12 und einen Einsatz 14 auf.

Der Reibenkörper 12 weist vier Reibeinrichtungen 20A, 20B, 20C, 20D auf, die an ihren Längskanten 22 miteinander verbunden sind, und zwar derart, dass ein im Querschnitt etwa quadratischer Reibenkörper 12 gebildet ist.

Der Reibenkörper 12 ist im Inneren hohl. Genauer gesagt schließen die Reibeinrichtungen 20 zwischen sich einen Hohlraum ein.

Ein unterer Bereich der Mehrfachreibe ist in Figur 1 mit 24 bezeichnet. Ein oberer Bereich ist mit 26 bezeichnet.

Der Reibenkörper 12 weist in dem oberen Bereich 26 einen Griff 28 auf, der sich in der Ausführung zwischen zwei gegenüberliegenden Reibeinrichtungen erstreckt, im vorliegenden Fall die Reibeinrichtungen 20A und 20C.

Der Einsatz 14 ist nach der Art einer Schublade ausgebildet und ist von unten in den Hohlraum des Reibenkörpers 12 einführbar. Vorzugsweise ist der Einsatz 14 rastend an dem Reibenkörper 12 sichtbar, obgleich dies nicht näher dargestellt ist.

Der Einsatz 14 weist im unteren Bereich 24 einen Boden 30 auf. Ferner weist der Einsatz 14 eine erste Seitenwand 32, eine zweite Seitenwand 34 und eine dritte Seitenwand 36 auf, die im Querschnitt eine U-Form bilden. Eine der zweiten Seitenwand 34 gegenüberliegende Seite 38 ist als offene Seite ausgebildet.

Im oberen Bereich 26 ist gegenüber dem Boden 30 ein Deckel 40 vorgesehen.

Der Boden 30, der Deckel 40 und die drei Seitenwände 32, 34, 36 schließen einen Aufnahmeraum 42 für geriebenes Reibgut ein.

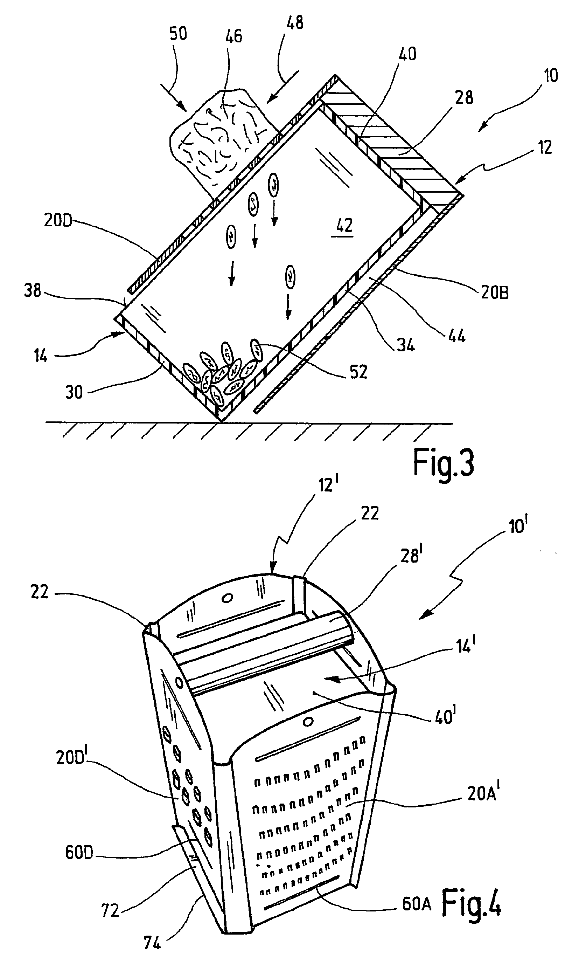

Wie es in Figur 3 gezeigt ist, ist die Länge des Einsatzes 14 in Bezug auf die Länge des von den Reibeinrichtungen 20 umschlossenen Hohlraumes 44 so gewählt, dass der Einsatz 14 im Gebrauch etwas gegenüber dem unteren Ende des Reibenkörpers 12 vorsteht.

Hierdurch ist es möglich, die Mehrfachreibe 10 im Gebrauch auf dem Einsatz 14 aufzusetzen, wobei dieser durch Druck von oben auf den Reibenkörper 12 in dem Reibenkörper 12 fixiert wird, auch wenn keine Rastung vorhanden sein sollte.

Hierzu ist ein Anschlag vorgesehen. In der dargestellten Ausführungsform ist der Anschlag gebildet durch den in Querrichtung verlaufenden Griff 28 des Reibenkörpers 12.

Der Einsatz 14 ist in vier unterschiedlichen Lagen in Bezug auf den Reibenkörper 12 in den Hohlraum 44 einsetzbar, und zwar derart, dass die offene Seite 38 jeweils zu einer der Reibeinrichtungen 20 hin weist.

In Figur 3 ist gezeigt, dass die offene Seite 38 hin zu der Reibeinrichtung 20D weist.

Demzufolge wird die Mehrfachreibe 10 mit der gegenüberliegenden Kante des Bodens 30 auf eine nicht näher bezeichnete Auflage wie ein Schneidbrett oder Ähnliches aufgesetzt, so dass sich die bevorzugte diagonale Stellung der Mehrfachreibe 10 ergibt.

Reibgut 46, wie beispielsweise Obst, Gemüse, Nüsse, Käse etc., wird nun auf die Außenseite der Reibeinrichtung 20D aufgesetzt und mit einer geringen Kraft angedrückt, wie es bei 50 gezeigt ist. Ferner wird das Reibgut 46 in Längsrichtung der Reibeinrichtung 20D bewegt, wie es bei 48 gezeigt ist.

Hierdurch fällt geriebenes Reibgut 52 durch entsprechende Öffnungen in der Reibeinrichtung 20D zunächst in den Hohlraum 44 und über die offene Seite 38 in den Aufnahmeraum 42 des Einsatzes 14.

Nach dem Gebrauch kann der Einsatz 14 auf einfache Weise aus dem Hohlraum 44 herausgenommen werden und das darin aufgefangene, geriebene Reibgut 52 kann einer weiteren Verwendung zugeführt werden.

Falls anderes Reibgut mit einer anderen Reibeinrichtung (z.B. 20B) zu reiben ist, wird der Einsatz 14 in der genau dieser Reibeinrichtung zugeordneten Lage in den Hohlraum 44 eingesetzt und ein neuer Reibgang kann vollzogen werden.

Es versteht sich, dass es aufgrund der Tatsache, dass der Einsatz 14 im Gebrauch auf der Unterlage (Küchenbrett) aufliegt, eine Verrastung zwischen dem Reibenkörper 12 und dem Einsatz 14 nicht unbedingt notwendig ist. Dennoch kann eine solche Verrastung vorgesehen werden, um zu vermeiden, dass sich der Einsatz 14 versehentlich aus dem Reibenkörper 14 löst.

In jedem Fall kann der Einsatz 14 auch durch Druck durch die obere Öffnung des Reibenkörpers 12 hindurch aus der unteren Öffnung aus dem Hohlraum 44 herausgeschoben werden. Sofern keine Rastung vorhanden ist, kann der Reibenkörper 12 auch einfach nach oben hin abgezogen werden, wobei der Einsatz 14 dann in der Regel mit der anderen Hand aufgenommen wird, sobald er hinreichend gut ergreifbar ist.

Die Reibeinrichtungen 20 können beliebiger Art sein. Es kann sich um jede Art von Reibe handeln, wie Käsereibe, Muskatreibe, Rohkostreibe, Röstireibe, etc. Der Begriff Reibeinrichtung soll jedoch auch Hobel und Ähnliches umfassen, wie V-Hobel, Waffelschneider, etc.

Demzufolge ist es nicht unbedingt notwendig, dass die Außenseiten der Reibeinrichtungen 20 plan sind. Die Außenseiten der Reibeinrichtungen 20 können auch versetzt sein, wie dies beispielsweise bei Gemüsehobeln üblich ist.

Der Einsatz 14 ist vorzugsweise zur Aufnahme eines nicht dargestellten Halters ausgelegt. Bei Nichtgebrauch kann der Halter für das Reibgut 46 folglich in dem Aufnahmeraum 42 verstaut werden, so dass insgesamt auch eine kompakte Verstauung möglich ist.

In der dargestellten Ausführungsform ist der Reibenkörper 12 aus Metall hergestellt und der Einsatz 14 ist aus Kunststoff hergestellt.

Es können jedoch auch der Reibenkörper 12 und der Einsatz 14 beide aus Metall oder beide aus Kunststoff hergestellt sein.

In den Figuren 4 bis 6 ist eine weitere Ausführungsform einer erfindungsgemäßen Mehrfachreibe gezeigt, die in diesen Figuren generell mit 10' bezeichnet ist.

Die Mehrfachreibe 10' entspricht hinsichtlich Aufbau und Funktionsweise generell der Mehrfachreibe 10 der Figuren 1 bis 3. Im Folgenden werden lediglich die Unterschiede zwischen diesen Mehrfachreiben erläutert.

Wie es in Figur 4 gezeigt ist, ist an den Reibeinrichtungen 20A', 20B', etc. jeweils im unteren Bereich eine Sicke 60A, 60B, etc. ausgebildet, die einen nach innen vortretenden Rastvorsprung bildet.

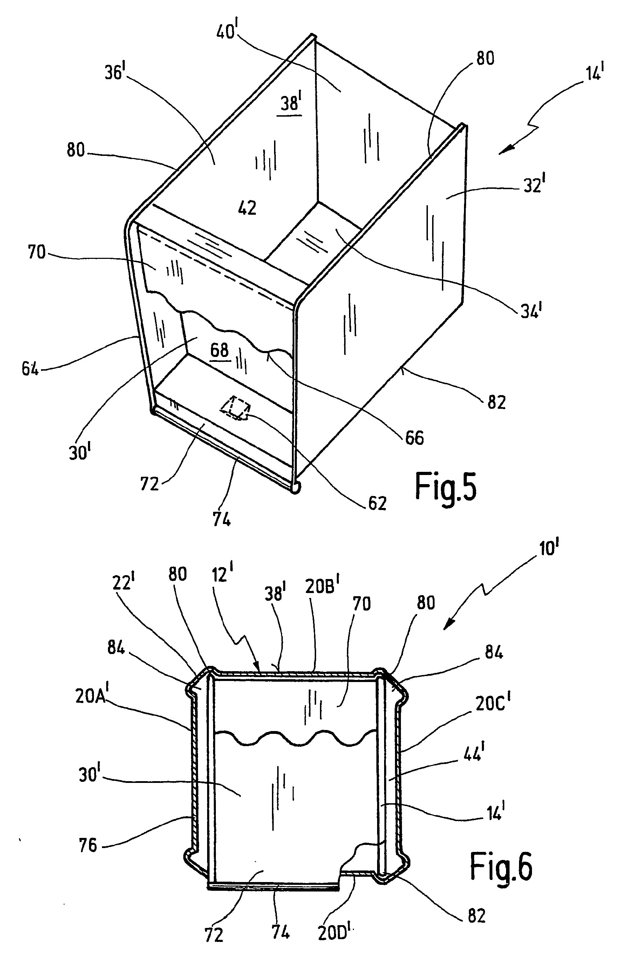

An dem Einsatz 14' ist, wie es in Figur 5 schematisch gezeigt ist, ein Rastvorsprung 62 ausgebildet, der in der dargestellten Ausführungsform nach außen gegenüber der zweiten Seitenwand 34' vorsteht.

Im eingesetzten Zustand des Einsatzes 14' hintergreift der Rastvorsprung 62 des Einsatzes 14' jeweils die Sicke 60 der Reibeinrichtung 20, die gegenüber der verwendeten Reibeinrichtung liegt.

Der Einsatz 14' weist ein unteres Ende 64 auf, in dessen Bereich ein Griffabschnitt 66 ausgebildet ist. Der Griffabschnitt 66 ermöglicht es, den Einsatz 14' auf einfache Weise aus dem Reibenkörper 12' herauszuziehen.

Zu diesem Zweck ist der Boden 30' des Einsatzes 14' gegenüber dem unteren Ende 64 versetzt, so dass ein Griffraum 68 gebildet ist. Von dem Bereich der offenen Seite 38' steht in Richtung zu der gegenüberliegenden Seite 34' eine Griffplatte 70 vor, die gegenüber dem Boden 30' beabstandet ist und folglich hintergriffen werden kann.

Es versteht sich jedoch, dass diese Art von Griffabschnitt 66 lediglich eine bevorzugte Ausgestaltung zur Ausbildung eines Griffes an der Unterseite des Einsatzes 14' darstellt.

An der mittleren Seitenwand 34', also der der Öffnung 38' gegenüberliegenden Seite, ist im Bereich des unteren Endes 64 an dem Einsatz 14' ein seitlicher Ansatz 72 ausgebildet.

Der seitliche Ansatz 72 ist in Relation zu dem Reibenkörper so geformt, dass er im eingesetzten Zustand seitlich gegenüber dem Reibenkörper 12' vorsteht und damit einen Anschlag bildet. Mit anderen Worten kann der Einsatz 14' soweit in den Hohlraum 44' eingeschoben werden, bis der Ansatz 72 an die Unterseite von einer der Reibeinrichtungen 20' anschlägt. Das untere Ende des Reibenkörpers 12' ist in Figur 6 mit 76 bezeichnet.

Diese Ausführungsform hat den Vorteil, dass ein Griff 28' in der Arbeitsposition des Einsatzes 14' vollständig umgriffen werden kann, so dass insgesamt eine bessere Ergonomie erreicht wird.

Mit anderen Worten dient der Griff 28' bei dieser Ausführungsform nicht als Anschlag, sondern ist in der Arbeitsposition des Einsatzes 14' gegenüber dem Deckel 40' beabstandet.

An der vorstehenden Kante des Ansatzes 72 ist eine Gummileiste 74 angebracht.

Da der Ansatz 72 der offenen Seite 38' gegenüberliegt, wird die Mehrfachreibe 10' im Gebrauch auf der äußeren Kante und damit auf der Gummileiste 74 aufgesetzt. Hierdurch wird eine Rutschhemmung realisiert.

Die einander gegenüberliegenden Seitenwände 32', 36', die zwischen sich die offene Seite 38' einschließen, sind im Bereich der offenen Seite 38' mit Längsführungsstegen 80 ausgestattet, die gegenüber dem Deckel 40' und dem Boden 30' vorstehen.

Entsprechende Längsführungsstege 82 sind an dem Einsatz 14' im Bereich der gegenüberliegenden Seite 34' ausgebildet.

Ferner sind die Kanten 22' des Reibenkörpers 12' als Taschen 84 ausgebildet.

Wie es insbesondere der Figur 6 zu entnehmen ist, greifen die Längsführungsstege 80, 82 des Einsatzes 14' im eingesetzten Zustand in die Taschen 84.

Hierdurch wird erreicht, dass der Einsatz 14' an dem Reibenkörper 12' jeweils so festgelegt werden kann, dass die offene Seite 38' des Einsatzes 14' unmittelbar hinter der Innenseite der jeweils benutzten Reibeinrichtung (in Figur 6 Reibeinrichtung 20B') angeordnet ist. Es kann erreicht werden, dass sämtliches geriebenes Reibgut 52 in den Aufnahmeraum 42 fällt.

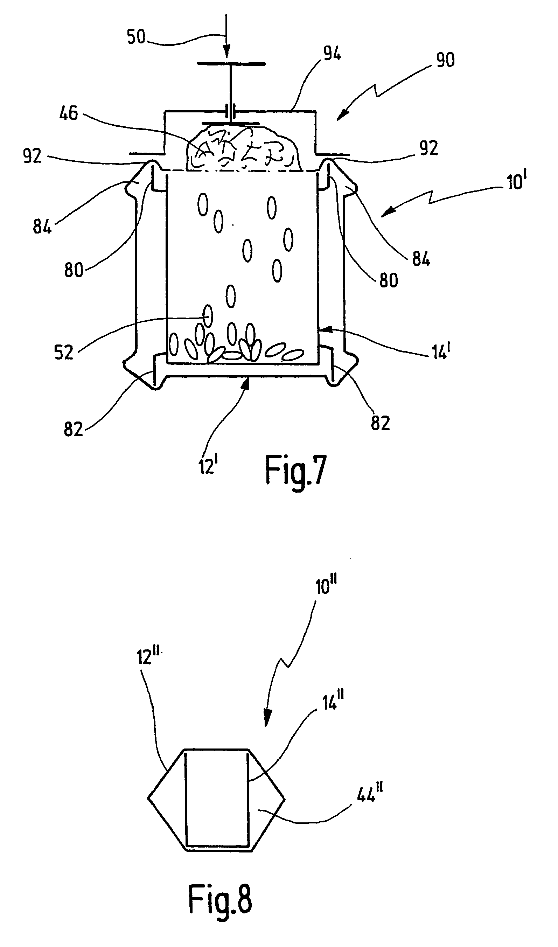

In Fig. 7 ist der Gebrauch der Mehrfachreibe 10' in Verbindung mit einem an sich bekannten Fruchthalter 90 gezeigt.

Der Fruchthalter 90 dient zum sicheren Ergreifen des Reibgutes 46 und weist ein Gehäuse 94 mit Hohlraum zur Aufnahme des Reibgutes 46 auf. Ferner beinhaltet der Fruchthalter 90 einen Schieber 96, der an dem Gehäuse 92 verschieblich gelagert ist und auf den die Andruckkraft 50 ausgeübt wird.

Die Mehrfachreibe 10' ist zur Verwendung mit dem Fruchthalter 90 bevorzugt, denn die Taschen 84 bilden an den Seiten der jeweiligen Reibeinrichtungen Vorsprünge 92, auf denen der Fruchthalter 90 aufliegt und in Längsrichtung geführt werden kann.

Die Längsführungsstege 80, 82 werden dabei im Inneren der Vorsprünge 92 geführt, so dass die Taschen 84 vorteilhafterweise eine Doppelfunktion besitzen.

Es ist ferner bevorzugt, wenn der Aufnahmeraum 42' des Einsatzes 14' dazu ausgelegt ist, den Fruchthalter 90 bei Nichtgebrauch aufzunehmen. Hierdurch kann die Gesamtvorrichtung 10', 90 kompakt verstaut werden.

Figur 8 zeigt eine weitere Ausführungsform einer Mehrfachreibe 10".

Bei der Mehrfachreibe 10" ist der Reibenkörper 12" im Querschnitt sechseckig ausgebildet. Der Einsatz 14" ist im Querschnitt etwa rechteckig ausgebildet. Es versteht sich jedoch, dass in den Reibenkörper 12" auch ein im Querschnitt sechseckiger Einsatz einführbar ist.

## Patentansprüche

1. Mehrfachreibe (10) für Reibgut (46) wie Obst, Gemüse, Käse, Nüsse, etc., mit wenigstens drei, vorzugsweise jedoch vier oder sechs Reibeinrichtungen (20), die jeweils eine bestimmte Reibfunktion aufweisen und an ihren Kanten (22) miteinander verbunden sind, so dass ein im Querschnitt polygonaler Reibenkörper (12) mit einem Hohlraum (44) gebildet ist, in den hinein geriebenes Reibgut (52) abgeführt wird, wobei dem Reibenkörper (12) ein Einsatz (14) zugeordnet ist, der in den Hohlraum (44) einsetzbar und zur Aufnahme von dem geriebenen Reibgut (52) geeignet ist, wobei ein unteres Ende (76) des Reibenkörpers (12) offen ist und wobei der Einsatz (14) über das untere offene Ende (76) in den Hohlraum einführbar ist, **dadurch gekennzeichnet, dass** der Einsatz (14) an seinem unteren Ende (64) einen seitlichen Ansatz (72) aufweist, der als Anschlag (72) dient, um das Maß des Einsetzens bzw. Einführens des Einsatzes zu begrenzen.

2. Mehrfachreibe nach Anspruch 1, **dadurch gekennzeichnet, dass** der Einsatz (14) im Querschnitt eine an den Reibenkörper (12) angepasste polygonale Form aufweist.

3. Mehrfachreibe nach Anspruch 1 oder 2, **dadurch gekennzeichnet, dass** der Einsatz (14) je nachdem, mit welcher Reibeinrichtung (20) gearbeitet werden soll, in unterschiedlichen Lagen in den Hohlraum (44) einsetzbar ist.

4. Mehrfachreibe nach einem der Ansprüche 1 bis 3, **dadurch gekennzeichnet, dass** der Einsatz (14) als Hohlkörper zur Aufnahme des geriebenen Reibguts (52) ausgebildet ist, wobei der Einsatz (14) im unteren Bereich (24) geschlossen und im Querschnitt zu einer Seite (38) hin offen ist, wobei das geriebene Reibgut (52) über die offene Seite (38) in den Einsatz (14) gelangt.

5. Mehrfachreibe nach Anspruch 1, **dadurch gekennzeichnet, dass** an dem Ansatz (72) eine der Rutschsicherung dienende elastische Kante (74) ausgebildet ist.

6. Mehrfachreibe nach Anspruch 5, **dadurch gekennzeichnet, dass** der seitliche Ansatz (72) gegenüber einer Seite (34) des Einsatzes (14) vorsteht, die einer Öffnung (38) des Einsatzes (14) gegenüberliegt.

7. Mehrfachreibe nach einem der Ansprüche 1 bis 6, **dadurch gekennzeichnet, dass** an dem Reibenkörper (12) und/oder an dem Einsatz (14) Rastmittel (60, 62) vorgesehen sind, um den Einsatz (14) in einer Arbeitsposition an dem Reibenkörper (12) festzulegen.

8. Mehrfachreibe nach Anspruch 7, **dadurch gekennzeichnet, dass** die Rastmittel (60, 62) an der Innenseite von wenigstens einer Reibeinrichtung (20) einen Rastvorsprung (62) aufweisen.

9. Mehrfachreibe nach einem der Ansprüche 1 bis 8, **dadurch gekennzeichnet, dass** der Reibenkörper (12') im Bereich wenigstens einiger seiner Kanten (22') mit einem solchen Profil versehen ist, dass Längsführungsstege (80, 82) des Einsatzes (14') darin geführt werden können.

10. Mehrfachreibe nach einem der Ansprüche 1 bis 9, **dadurch gekennzeichnet, dass** der Einsatz (14') im Bereich seines unteren Endes mit einem Griff (66, 68) versehen ist.

11. Mehrfachreibe nach einem der Ansprüche 1 bis 10, **dadurch gekennzeichnet, dass** der Reibenkörper (12) im Bereich (26) seines oberen Endes offen ist.

## Claims

1. A multi grater (10) for material (46) to be grated, such as fruit, vegetables, cheese, nuts, etc., with at least three, but preferably four or six grating devices (20) which each have a specific grating function and are connected to one another at their edges (22), thus forming a grater body (12) of polygonal cross section with a cavity (44) into which grated material (52) is discharged, wherein the grater body (12) is assigned an insert (14) which can be inserted into the cavity (44) and is suitable for receiving the grated material (52), wherein a lower end (76) of the grater body (12) is open, and wherein the insert (14) can be introduced into the cavity via the lower open end (76), **characterized in that** the insert (14) has, at its lower end (64), a lateral extension piece (72) which serves as the stop (72) in order to limit the extent to which the insert (14) is inserted or introduced.

2. The multi grater as claimed in claim 1, **characterized in that** the insert (14) has, in cross section, a polygonal shape matched to the grater body (12).

3. The multi grater as claimed in claim 1 or 2, **characterized in that** the insert (14) can be inserted into the cavity (44) in different positions depending on which grating device (20) is to be used.

4. The multi grater as claimed in one of claims 1 to 3, **characterized in that** the insert (14) is designed as a hollow body for receiving the grated material (52), the insert (14) being closed in the lower region (24) and, in cross section, being open toward one side (38), the grated material (52) passing via the open side (38) into the insert (14).

5. The multi grater as claimed in claim 1, **characterized in that** an elastic edge (74) serving for protection against slipping is formed on the extension piece (72).

6. The multi grater as claimed in claim 5, **characterized in that** the lateral extension piece (72) protrudes in relation to a side (34) of the insert (14) that lies opposite an opening (38) of the insert (14).

7. The multi grater as claimed in one of claims 1 to 6, **characterized in that** latching means (60, 62) are provided on the grater body (12) and/or on the insert (14) in order to fix the insert (14) in a working position on the grater body (12).

8. The multi grater as claimed in claim 7, **characterized in that** the latching means (60, 62) on the inside of at least one grating device (20) have a latching projection (62).

9. The multi grater as claimed in one of claims 1 to 8, **characterized in that** the grater body (12') is provided in the region of at least some of its edges (22') with a profile such that longitudinal guide webs (80, 82) of the insert (14') can be guided therein.

10. The multi grater as claimed in one of claims 1 to 9, **characterized in that** the insert (14') is provided with a handle (66, 68) in the region of its lower end.

11. The multi grater as claimed in one of claims 1 to 10, **characterized in that** the grater body (12) is open in the region (26) of its upper end.

## Revendications

1. Multirâpe (10) pour des produits à râper (46), comme des fruits, des légumes, du fromage, des noix, etc., avec au moins trois, de préférence cependant quatre ou six dispositifs de râpage (20), qui présentent chacun une fonction de râpage déterminée et qui sont reliés les uns aux autres sur leurs bords (22), de façon à former un corps de râpe (12) de section transversale polygonale avec un espace creux (44), dans lequel un produit à râper râpé (52) est évacué, dans laquelle un insert (14) est associé au corps de râpe (12), lequel peut être inséré dans l'espace creux (44) et convient pour recevoir les produits à râper râpés (52), dans laquelle une extrémité inférieure (76) du corps de râpe (12) est ouverte et dans laquelle l'insert (14) peut être introduit dans l'espace creux par l'extrémité inférieure ouverte (76), **caractérisée en ce que** l'insert (14) présente à son extrémité inférieure (64) un épaulement latéral (72) qui fait office de butée (72) pour limiter le degré d'insertion ou d'introduction de l'insert.

2. Multirâpe selon la revendication 1, **caractérisée en ce que** l'insert (14) présente une forme polygonale adaptée en section transversale au corps de râpe (12).

3. Multirâpe selon la revendication 1 ou 2, **caractérisée en ce que** l'insert (14) peut être inséré dans l'espace creux (44), dans différentes positions selon le dispositif de râpage (20) avec lequel on doit travailler.

4. Multirâpe selon l'une quelconque des revendications 1 à 3, **caractérisée en ce que** l'insert (14) est conçu comme un corps creux destiné à recevoir les produits à râper râpés (52), dans laquelle l'insert (14) est fermé dans la région inférieure (24) et est ouvert vers un côté (38) en section transversale, dans laquelle les produits à râper râpés (52) pénètrent dans l'insert (14) par le côté ouvert (38).

5. Multirâpe selon la revendication 1, **caractérisée en ce qu'**un bord élastique (74) servant de protection anti-glissement est réalisé sur l'épaulement (72).

6. Multirâpe selon la revendication 5, **caractérisée en ce que** l'épaulement latéral (72) est saillant par rapport à un côté (34) de l'insert (14), qui est opposé à une ouverture (38) de l'insert (14).

7. Multirâpe selon l'une quelconque des revendications 1 à 6, **caractérisée en ce qu'**il est prévu sur le corps de râpe (12) et/ou l'insert (14) des moyens d'encliquetage (60, 62), destinés à immobiliser l'insert (14) dans une position de travail sur le corps de râpe (12).

8. Multirâpe selon la revendication 7, **caractérisée en ce que** les moyens d'encliquetage (60, 62) présentent une saillie d'encliquetage (62) sur le côté intérieur d'au moins un dispositif de râpage (20).

9. Multirâpe selon l'une quelconque des revendications 1 à 8, **caractérisée en ce que** le corps de râpe (12') est muni, dans la région d'au moins un de ses bords (22'), d'un profil tel que des nervures de guidage longitudinales (80, 82) de l'insert (14') puissent y être guidées.

10. Multirâpe selon l'une quelconque des revendications 1 à 9, **caractérisée en ce que** l'insert (14') est muni d'une poignée (66, 68) dans la région de son extrémité inférieure.

11. Multirâpe selon l'une quelconque des revendications 1 à 10, **caractérisée en ce que** le corps de râpe (12) est ouvert dans la région (26) de son extrémité supérieure.
